# EUROPEAN PATENT APPLICATION

(11) **EP 1 411 353 A2**
(43) Date of publication of application: **21.04.2004**
(21) Application number: 03023660.8
(22) Date of filing: 17.10.2003
(51) Int. Cl.: G01N 27/407, G01M 15/00, G01N 33/00

(54) **Miniaturized exhaust gas sensor**

(30) Priority: 18.10.2002 US 274305
(71) Applicant: ROBERT BOSCH CORPORATION, Broadview, Illinois 60155-4594 (US)
(72) Inventor: Day, John, Greenville South Carolina 29615 (US); Schneider, Jens, Anderson South Carolina 29621 (US); Hahn, Norman, Anderson South Carolina 29621 (US); Barnes, Damien, Anderson South Carolina 29621 (US); Prewitt, Grady, Anderson South Carolina 29621-6091 (US); Weyl, Helmut, 71701 Schwieberdingen (DE); Frost, Stan, Belton South Carolina 29627 (US)
(74) Representative: Grünecker, Kinkeldey, Stockmair & Schwanhäusser Anwaltssozietät

(57) **Abstract**

An exhaust gas sensor includes a sensor element configured to communicate with an exhaust gas of an internal combustion engine, a contact pin having a first end electrically connected to the sensor element and a second end extending away from the sensor element, and a spark plug-type post terminal connected to the second end of the contact pin. The spark plug-type post terminal preferably conforms with SAE J548-1 standards and can be threaded onto the second end of the contact pin. Also provided is an exhaust gas sensor designed to be shorter and better suited for use in non-automotive applications.

## Description

### FIELD OF THE INVENTION

The invention relates to exhaust gas sensors.

### BACKGROUND OF THE INVENTION

Exhaust gas sensors are well known in the automotive industry for sensing the oxygen, carbon monoxide, or hydrocarbon content of the exhaust stream generated by internal combustion engines. Stoichiometric or "Nernst"-type oxygen sensors (a widely-used type of exhaust gas sensor) measure the difference between the partial pressure of oxygen found in the exhaust gas and oxygen found in the atmosphere. By determining the amount of oxygen in the exhaust gas, the oxygen sensor enables the engine control unit to adjust the air/fuel mixture and achieve optimal engine performance. Other types of exhaust gas sensors that operate based on different principles are also known and widely used in the automotive industry.

### SUMMARY OF THE INVENTION

The invention provides an improved exhaust gas sensor that is much smaller, lighter, and easier to install than the existing exhaust gas sensors commonly used for automotive applications. The sensor of the invention is well-suited for motorcycle, snowmobile, ATV, lawnmower, and other non-automotive applications that typically do not have exhaust gas sensors, but will soon likely begin using exhaust gas sensors due to recent initiatives to tighten emission requirements for smaller engines.

The length of the sensor can be varied to suit the specific application in which it will be used, based largely on the operating temperatures of the specific internal combustion engine. Temperature-resistant materials and improved heat-dissipating features facilitate using the shorter sensors of the invention in higher temperature environments.

In one embodiment of the invention, the sensor includes a standard spark plug-type post terminal instead of a typical wire harness connector. The spark plug-type post terminal provides a universal connection that can be used for multiple applications and that enables the sensor to be sold as a universal replacement part in the aftermarket. To provide air exchange between the atmosphere and the reference chamber in the oxygen sensor, the improved sensor includes a gas-permeable grommet that allows the passage of air into and out of the reference chamber, but substantially prevents the passage of liquids (e.g., water, oils, and the like) into the reference chamber. O-rings seal the grommet against the sensor body to prevent entry of liquids between the grommet and the sensor body.

The spark plug-type post terminal and grommet/O-ring configuration also provides flexibility in assembling and testing the sensor. Specifically, for sensors designed for use on relatively low-temperature engine applications, standardized high-temperature testing can still be performed on the sensor subassembly before the grommet and O-rings, which may not be suited to undergo the high-temperature testing, are installed on the sensor.

More specifically, the invention provides an exhaust gas sensor including a sensor element configured to communicate with an exhaust gas of an internal combustion engine, a contact pin having a first end electrically connected to the sensor element and a second end extending away from the sensor element, and a spark plug-type post terminal connected to the second end of the contact pin.

In one aspect of the invention, the spark plug-type post terminal conforms with SAE J548-1 standards. In another aspect of the invention, the spark plug-type post terminal is threaded onto the second end of the contact pin.

The exhaust gas sensor can further include a housing supporting the sensor element, a sleeve surrounding at least a portion of the contact pin and having a first end connected to the housing and a second end at a distance from the first end, and a grommet surrounding at least a portion of the contact pin adjacent the second end of the sleeve. The grommet electrically isolates at least a portion of the contact pin and the spark plug-type post terminal from the sleeve. The grommet is preferably gas-permeable polytetrafluoroethylene, allowing gas to pass therethrough while substantially preventing liquids from passing therethrough. The sensor can also include a first seal between the grommet and the sleeve, and a second seal between the grommet and the contact pin.

In one embodiment, the sensor element includes a cup-shaped member supported by the housing. The cup-shaped member has a closed end, an open end, an outer surface, and an inner surface. The inner surface defines a chamber. An exhaust electrode is positioned on the outer surface of the cup-shaped member and a reference electrode is positioned on the inner surface of the cup-shaped member, within the chamber.

The invention also provides a method of assembling and testing an exhaust gas sensor. The sensor includes a subassembly capable of operating as an exhaust gas sensor and capable of withstanding a predetermined temperature used for testing. The sensor also includes at least one component that is not capable of withstanding the predetermined testing temperature. The method includes assembling the subassembly, testing the subassembly at the predetermined testing temperature, and after testing the subassembly, installing the at least one component onto the subassembly.

In one aspect of the invention, testing the subassembly at the predetermined temperature includes exposing at least a portion of the subassembly to a gas temperature ranging from about 850 to about 1050 degrees Centigrade. Installing the at least one component onto the subassembly includes installing a grommet onto the subassembly, and can further include installing an O-ring between the grommet and the subassembly. A spark plug-type terminal can also be installed onto the subassembly after installing the at least one component onto the subassembly to secure the at least one component onto the subassembly.

The invention further provides an exhaust gas sensor for use in non-automotive applications. The sensor includes a housing having a threaded portion configured to be received in a threaded opening, and an integral nut portion adjacent the threaded portion. The nut portion has a first end surface and a second end surface and is configured to receive a tool for tightening the housing in the threaded opening.

The sensor also includes a sensor element having a first end connected to the housing and a second end extending away from the housing. The sensor element includes a cup-shaped member supported by the housing, the cup-shaped member having a closed end, an open end, an outer surface, an inner surface defining a chamber, an exhaust electrode on the outer surface, and a reference electrode on the inner surface within the chamber.

A contact pin is electrically connected to the sensor element and is at least partially surrounded by a sleeve assembly connected to the housing. The sleeve assembly includes a first end connected to the housing and a second end at a distance from the housing. The second end includes an opening through which at least one of the contact pin and a lead electrically connected to the contact pin exits the sleeve assembly.

The exhaust gas sensor has a first length dimension defined as a distance from the second end surface of the nut portion to the second end of the sleeve assembly. The first length dimension ranges from about 33 mm to about 55 mm, and in one aspect of the invention, from 33 mm to about 43 mm.

In another aspect of the invention, the sleeve assembly includes a sleeve and a grommet at least partially in the sleeve. The grommet at least partially defines the second end of the sleeve assembly. The grommet has a first end closest to the housing and the exhaust gas sensor has a second length dimension defined as a distance from the second end surface of the nut portion to the first end of the grommet. The second length dimension ranges from about 15 mm to about 45 mm.

Other features and advantages of the invention will become apparent to those skilled in the art upon review of the following detailed description, claims, and drawings.

### BRIEF DESCRIPTION OF THE DRAWINGS

Fig. 1 is a cross-sectional view of an exhaust gas sensor embodying the invention.
Fig. 2 is a cross-sectional view of an exhaust gas sensor similar to the sensor of Fig. 1 with a shorter body length.
Fig. 3 is an enlarged cross-sectional view of the cup-shaped ceramic member shown in Figs. 1 and 2.
Fig. 4 is a cross-sectional view of a second embodiment of an exhaust gas sensor according to the invention.
Fig. 5 is a cross-sectional view of an exhaust gas sensor similar to the sensor of Fig. 4 with a shorter body length.
Fig. 6 is an exploded cross-sectional view of the sensor of Fig. 4.
Fig. 7 is graph illustrating the relationship between the temperature of the hex portion of an exhaust gas sensor and the minimum body length for the sensor, where two different grommets are used.
Fig. 8 is a graph illustrating the measured temperature at various points along the length of an exhaust gas sensor for three sensors of differing body length.

Before one embodiment of the invention is explained in detail, it is to be understood that the invention is not limited in its application to the details of construction and the arrangements of the components set forth in the following description or illustrated in the drawings. The invention is capable of other embodiments and of being practiced or being carried out in various ways. Also, it is understood that the phraseology and terminology used herein is for the purpose of description and should not be regarded as limiting. The use of "including" and "comprising" and variations thereof herein is meant to encompass the items listed thereafter and equivalents thereof as well as additional items.

### DETAILED DESCRIPTION OF THE PREFERRED EMBODIMENT

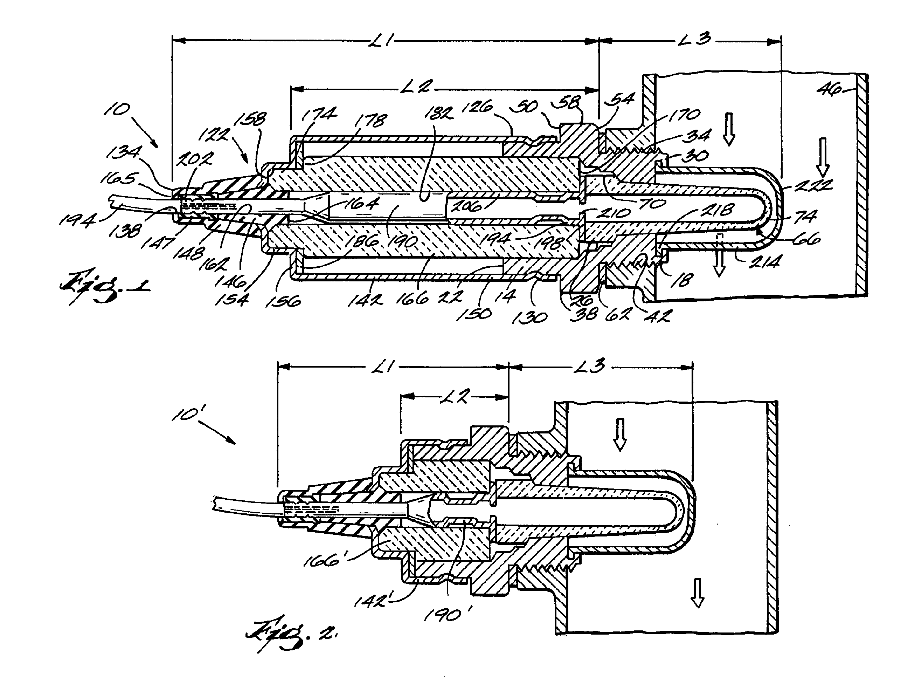

Fig. 1 illustrates a first embodiment of a miniaturized exhaust gas sensor 10 according to the invention. The illustrated sensor 10 is a case-grounded, unheated, single wire sensor, however, those skilled in the art will understand that the sensor 10 could be modified to be a heated, multiple-wire sensor.

The sensor 10 includes a generally cylindrical metallic housing 14 having a first end 18 and a second end 22. A bore 26 extends through the housing 14 from the end 18 to the end 22. The purpose of the bore will be explained in greater detail below. In the illustrated embodiment, the housing 14 includes a crimp shoulder 30 adjacent the end 18, a threaded portion 34 extending from near the crimp shoulder 30 toward the end 22, and a nut or hex portion 38 between the threaded portion 34 and the end 22. The threaded portion 34 is configured to be received in a threaded aperture 42 of an exhaust pipe 46 or other component (not shown) of an internal combustion engine (not shown) used for non-automotive applications, such as motorcycles, snowmobiles, ATV's, lawnmowers, and the like.

The nut portion 38 includes a first end surface 50, a second end surface 54 and a hexagonal outer surface 58 extending between the surfaces 50 and 54. The hexagonal outer surface 58 is configured to receive a tool, such as a crescent wrench or a socket wrench (not shown), that can be used to tighten the housing 14 in the threaded aperture 42. A washer 62 is preferably mounted on the housing 14 between the threaded portion 34 and the end surface 54 of the nut portion 38 so that the end surface 54 does not directly engage the exhaust pipe 46 when the sensor 10 is mounted for use.

The bore 26 of the housing 14 is sized to receive and support a sensor element 66 having a first end 70 that engages the housing 14 in the bore 26, and a second end 74 that extends out of and away from the end 18 of the housing 14. A seal ring (not shown) can be interposed between the bore 26 and the first end 70 to seal the interface. In the illustrated embodiment, the sensor element 66 is the type commonly referred to as a thimble-type element, however, those skilled in the art will understand that planar technology sensor elements can also be used. It should be noted, however, that sensors having thimble-type sensor elements are typically longer than sensors having planar technology sensor elements, and that any dimensional characteristics of the sensor 10 discussed below are intended to be taken in relation to other sensors using thimble-type sensor elements.

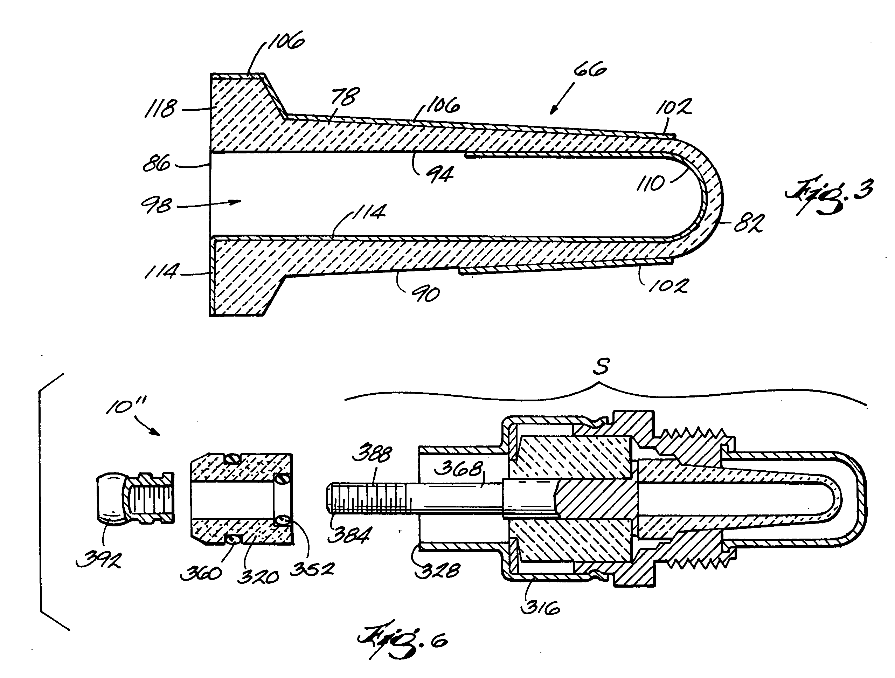

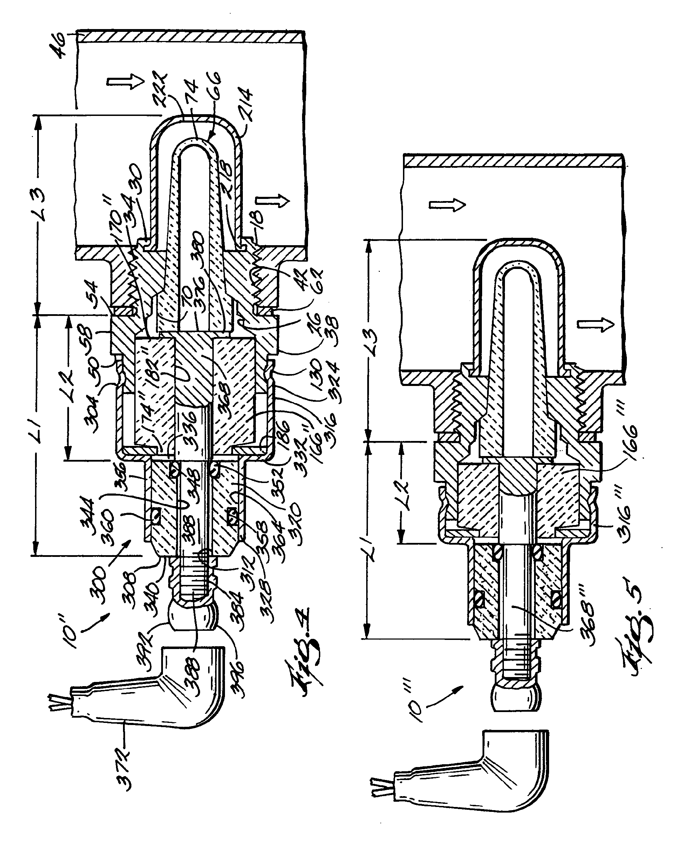

As best seen in Fig. 3, the illustrated sensor element 66 includes a ceramic, cup-shaped or thimble-shaped member 78, of the type commonly known and made from materials such as stabilized ZrO₂, CaO- and/or Y₂O₃-stabilized ZrO₂, Al₂O₃, Mg-spinel, and forsterite. The cup-shaped member 78 includes a closed end 82, an open end 86, an outer surface 90, and an inner surface 94. The inner surface 94 defines a chamber 98, the purpose of which will be described below.

An outer or exhaust electrode 102 of conductive and catalytically active material, such as platinum or other similar conductive and catalytically active materials, is positioned on the outer surface 90. A lead portion 106 of the exhaust electrode 102 extends along the outer surface 90 toward the open end 86 of the cup-shaped member 78 to be in electrical engagement with the bore 26 of the housing 14, thereby grounding the exhaust electrode 102 through the housing 14. The outer electrode 102 communicates with the exhaust gas stream, as is understood by those skilled in the art.

An inner or reference electrode 110 of conductive and catalytically active material is positioned on the inner surface 94 within the chamber 98. A lead portion 114 of the reference electrode 110 extends along the inner surface 94 toward the open end 86 of the cup-shaped member 78 and out of the chamber 98 along an end surface 118 defining the open end 86 of the member 78. The reference electrode 110 communicates with reference air inside the chamber 98, as is also understood by those skilled in the art.

The sensor 10 further includes a sleeve assembly 122 connected to the end 22 of the housing 14. The sleeve assembly 122 includes a first end 126 that, in the illustrated embodiment, is crimped to the housing 14 at crimps 130. Of course, other joining techniques, such as welding, adhesives, brazing, soldering, and the like, can be used instead of, or in combination with the crimps 130 to join the sleeve 142 and the housing 14 and/or provide a hermetic seal between the sleeve 142 and the housing 14. The sleeve assembly 122 further includes a second end 134 at a distance from the housing 14 and including an opening 138, the purpose of which will be described below.

In the illustrated embodiment, the sleeve assembly 122 includes a metallic sleeve 142 and a non-metallic grommet 146 at least partially retained by the sleeve 142. The sleeve assembly 122 further includes a non-metallic seal bushing 147 and a retaining cap 148. The sleeve 142 includes a first end 150 corresponding to the first end 126 of the sleeve assembly 122, and a second end 154 that is stepped at step 156 to define a reduced-diameter boss 158. The boss 158 receives and supports the grommet 146.

The grommet 146 illustrated in Fig. 1 is preferably made from non-porous, non-gas-permeable polytetrafluoroethylene (PTFE) or polyethyletherketone, and includes a bore 162 extending therethrough. The grommet 146 also includes a first end 164 closest to the housing 14.

The seal bushing 147 is preferably made of viton, silicon, rubber, or similar materials and abuts the end of the grommet 146 opposite the first end 164. The retaining cap 148 covers the seal bushing 147 and at least a portion of the grommet 146. A distal end 165 of the retaining cap 148 includes the opening 138. The retaining cap 148 is made of PTFE and is configured to engage the outer surface of the grommet 146 via a toothed engagement (not shown) that substantially prevents removal of the retaining cap 148 once it has been installed on the grommet 146. It is to be understood that the illustrated sleeve assembly 122, and particularly the configuration of the second end 134 can be modified depending on the specific type of grommet 146, seal bushing 147, and retaining cap 148 used.

The sleeve assembly 122 houses and protects additional components of the sensor 10. A ceramic bushing 166 is disposed within the sleeve assembly 122 and includes a first end 170 received in the bore 26 of the housing 14, a second end 174 at least partially received in the boss 158 of the sleeve 142, a stepped portion 178 adjacent the second end 174, and a bore 182 extending through the bushing 166 between the first and second ends 170, 174. A disk spring 186 is disposed between the sleeve 142 and the stepped portion 178 of the bushing 166 to bias the bushing 166 toward the housing 14. In the illustrated embodiment, the bushing 166 is made of ceramic materials known as soapstone steatite or crypto-crystalline talc, and in some instances, can be made from materials having lower thermal conductivity and higher compressive strength, such as DOTHERM DT600M available from Industria Engineering Products in Uxbridge, United Kindgom.

The bore 182 of the bushing 166 houses a conductive contact pin 190 that electrically connects the sensor element 66 to a wire lead 194 extending from the sensor 10 for electrical connection to the engine control unit (ECU). The bushing 166 thereby electrically isolates the contact pin 190 from the housing 14 and the sleeve 142. The contact pin 190 includes a first end 194 defining a substantially planar plate portion 198 that engages the end surface 118 of the cup-shaped member 78, thereby electrically contacting the lead portion 114 of the reference electrode 110. The biasing of the bushing 166 toward the housing 14 by the disk spring 186 helps maintain the electrical connection between the plate portion 198 and the lead portion 114.

A second end 202 of the contact pin 190 extends through the bore 162 of the grommet 146 and into the seal bushing 147. Therefore, the grommet 146 electrically isolates the contact pin from the sleeve 142. An end of the wire lead 194 is inserted and crimped or otherwise electrically and mechanically secured into the hollow second end 202 of the contact pin 190, thereby completing the electrical pathway between the sensor element 66 and the wire lead 194. The wire lead 194 exits the sleeve assembly 122 through the opening 138 in the retaining cap 148. The seal bushing 147 and the retaining cap 148 substantially seal the end of the sensor 10 around the contact pin 190/wire lead 194 interface.

The contact pin 190 further includes a hollow body portion 206 extending between the ends 194, 202. The hollow body portion 206 provides a pathway for reference air to enter and exit the chamber 98 defined by the cup-shaped member 78. An aperture 210 in the plate portion 198 provides communication between the chamber 98 and the hollow body portion 206. Reference air from the atmosphere enters the hollow body portion 206 through the wire lead 194. More specifically, the wire lead 194 typically includes a plurality of wire strands braided together to form the conductive portion of the wire lead 194. Reference air flows in and around the braided strands to supply an exchange of reference air to the hollow body portion 206 and into the chamber 98.

The specific configuration of the contact pin 190 illustrated in Fig. 1 is only one of many suitable contact pin configurations that can be used. Those skilled in the art will recognize that the configuration of the contact pin can be modified without departing from the invention.

The sensor 10 also includes a tube 214 that substantially surrounds and protects the second end 74 of the sensor element 66 extending into the exhaust gas stream. The illustrated tube 214 is made of stainless steel or other heat resistant metal alloy and includes a first, open end 218 configured to be secured to the housing 14 by the crimp shoulder 30. Alternatively, the open end 218 can be welded to the housing 14. A second, closed end 222 of the tube substantially surrounds and protects the second end 74 of the sensor element 66. The tube 214 allows exhaust gas to enter therein for communication with the sensor element 66, yet protects the sensor element 66 from debris particles contained within the exhaust gas stream.

The sensor 10 of Fig. 1 is well suited for use in non-automotive applications, such as motorcycles, snowmobiles, ATV's, lawnmowers, and the like because of the various length dimensions that can be achieved depending on the specific application in which the sensor 10 will be used. Because internal combustion engines in non-automotive applications are typically smaller, less confined, and do not generate as much heat as automotive engines, it is possible to reduce the overall length of the sensor 10 from that of prior art sensors previously used in the automotive industry.

For example, the sensor 10 includes a first length dimension L1 defined as a distance from the second end surface 54 of the nut portion 38 to the second end 134 of the sleeve assembly 122. The first length dimension L1 of the sensor 10 can range from about 39 mm to about 59 mm, and even more preferably from about 39 mm to about 55 mm. One preferred embodiment of the sensor 10 has a first length dimension L1 of about 43 mm. This range is believed to provide at least some length dimensions L1 that are shorter than corresponding lengths of prior art exhaust gas sensors (believed to go only as low as 56 mm for prior art thimble-type sensors), making the sensor 10 well-suited for the confined spaces of smaller, non-automotive engine applications.

The sensor 10 also includes a second length dimension L2 defined as a distance from the second end surface 54 of the nut portion 38 to the step 156 in the sleeve 142, which is closely adjacent to or substantially co-planar with the first end 164 of the grommet 146. The second length dimension L2 of the sensor 10 can range from about 15 mm to about 45 mm, and even more preferably from about 15 mm to about 35 mm. One preferred embodiment of the sensor 10 has a second length dimension L2 of about 19 mm. This range is believed to provide at least some length dimensions L2 that are shorter than corresponding lengths of prior art exhaust gas sensors, again making the sensor 10 well-suited for the confined spaces of smaller, non-automotive engine applications.

Fig. 2 illustrates a sensor 10' that is substantially the same as the sensor 10, but that is significantly shorter in overall length. The shortening of the first and second length dimensions L1 and L2 is achieved by shortening various components of the sensor 10'. The shortened components are indicated as prime ('). More specifically, as seen in Fig. 2, the contact pin 190', the bushing 166', and the sleeve 142' are shortened in length to achieve the shorter length dimensions L1 and L2. To make a longer sensor, these same components can be lengthened. The remaining components not labeled in Fig. 2 are substantially identical to those referenced in Fig. 1.

The ability to shorten and lengthen the dimensions L1 and L2 within the ranges noted above is largely dictated by the operating temperature observed by the sensors 10, 10' for the particular application, and the specific materials being used in the sensor components. More specifically, the acceptable minimum length for a given sensor 10, 10' is based mainly on the rated maximum continuous operating temperature of the sealing grommet 146 being used, and the sensor's ability to dissipate enough heat along its length so that the rated operating temperature of the grommet 146 is not exceeded.

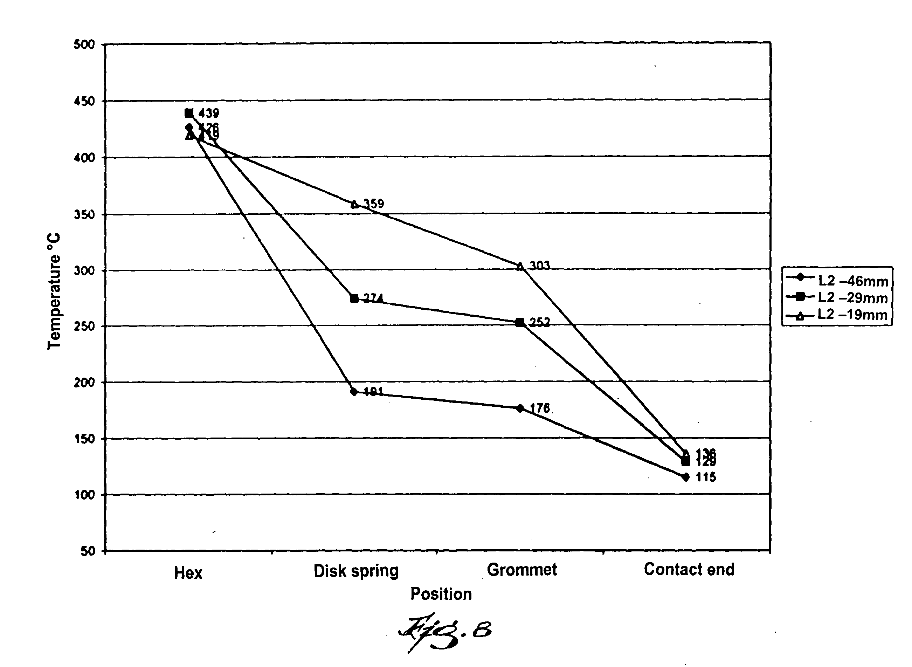

For example, Fig. 7 illustrates a graph of the minimum second length dimension L2 (labeled as body length), as a function of the temperature of the hex or nut portion 38. The two data sets were modeled for sensors 10, 10' with grommets 146 rated for maximum continuous temperatures of 250 (PTFE) and 300 (polyethyletherketone) degrees Centigrade. Using this model, a designer can determine the approximate minimum body length L2 of the sensor 10, 10' for any given application based on the maximum temperature the sensor 10, 10' will face, understanding that each installation will have variations in gas temperature, flow, and exhaust pipe installation detail that will impact the minimum length L2. Fig. 8 illustrates another model illustrating temperature distribution over the components of the sensors 10, 10' for varying second length dimensions L2.

To facilitate shortening the sensors 10, 10', heat dissipating features can be added to the sensor 10, 10'. For example, fins (not shown) can be added to the tube 214 and/or the nut portion 38 of the housing 14. Additionally, holes (not shown) can be drilled in the nut portion 38 to increase surface area for heat radiation. As mentioned above, DOTHERM DT600M can be used as the material for the bushing 166 and polyethyletherketone can be used as the material for the grommet 146. High temperature resistant metals can be used for the sleeve 142, and the thickness of the sleeve 142 can be varied.

The sensor 10 further includes a third length dimension L3 defined as a distance from the second end 222 of the tube 214 to the second end surface 54 of the nut portion 38. The third length dimension L3 can range from about 18 mm to about 28 mm, and even more preferably from about 23 mm to about 28 mm. Because the exhaust pipes in non-automotive applications are typically smaller, reducing the third length dimension L3 will not negatively impact the gas flow to the sensor element 66. The same sensor element 66 can be used over this entire range of L3 dimensions by modifying the bore 26 in the housing 14 to vary the seating position of the sensor element 66. A corresponding change in the length of the bushing 166, 166' and/or contact pin 190, 190' and/or sleeve 142, 142' may also be needed.

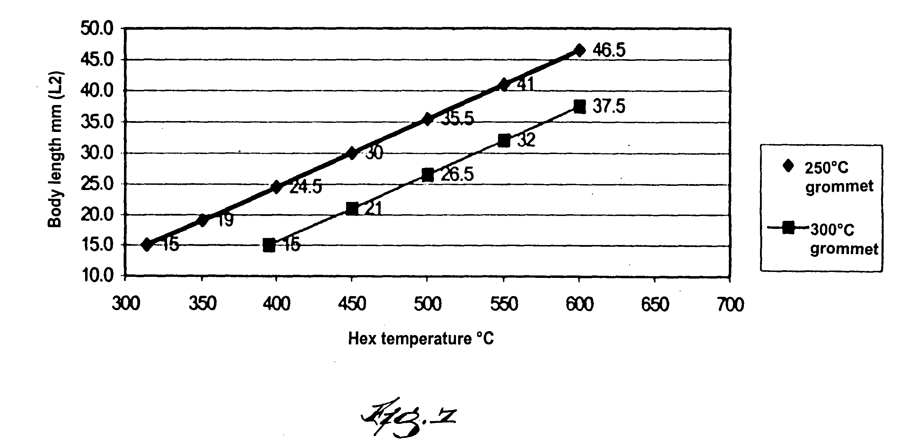

Figs. 4 and 6 illustrate a sensor 10" that is a second embodiment of the invention. Components of the sensor 10" that are substantially the same as components of the sensors 10, 10' have been given like reference numerals and will not be discussed again in detail. Like the sensors 10, 10', the sensor 10" is also well-suited for non-automotive applications, such as motorcycles, snowmobiles, ATV's, lawnmowers, and the like, due to its shortened length.

The sensor 10" includes a sleeve assembly 300 that is configured differently from the sleeve assembly 122 of the sensors 10, 10'. Specifically, the sleeve assembly 300 includes a first end 304 that, in the illustrated embodiment, is crimped to the housing 14 at crimps 130. Of course, other joining techniques, such as welding, adhesives, brazing, soldering, and the like, can be used instead of, or in combination with the crimps 130 to join the sleeve 142 and the housing 14 and/or to provide a hermetic seal between the sleeve 142' and the housing 14. The sleeve assembly 300 further includes a second end 308 at a distance from the housing 14 and including an opening 312, the purpose of which will be described below.

In the illustrated embodiment, the sleeve assembly 300 includes a metallic sleeve 316 and a non-metallic grommet 320 at least partially retained by the sleeve 316 to define at least a portion of the second end 308 of the sleeve assembly 300. The sleeve 316 includes a first end 324 corresponding to the first end 304 of the sleeve assembly 300, and a second open end 328 sized to receive the grommet 320. The sleeve 316 is stepped at step 332 to receive and support the grommet 320.

The grommet 320 illustrated in Figs. 4 and 6 is preferably made from porous, gas-permeable polytetrafluoroethylene (PTFE), for reasons that will be discussed below. The grommet 320 has a first end 336 closest to the housing 14 and a second end 340 at a distance from the first end 336. The grommet 320 includes a bore 344 extending therethrough between the ends 336, 340. An end of the bore 344 adjacent the end 340 defines the opening 312. An end of the bore 344 adjacent the end 336 includes a larger diameter portion 348 configured to receive an O-ring 352 or similar sealing device, the purpose of which will be described below.

The outer surface 356 of the grommet 320 includes a groove 358 configured to receive an O-ring 360 or similar sealing device that substantially seals the interface between the outer surface 356 of the grommet 320 and an inner wall 364 of the sleeve 316, to substantially prevent the leakage of liquids into the sensor element 66. It is to be understood that the illustrated sleeve assembly 300, and particularly the configuration of the second end 308 can be modified depending on the specific type and configuration of grommet 320 used.

The ceramic bushing 166" of the sensor 10" is similar to the bushing 166, except that the second end 174" has been shortened due to the lack of any boss in the sleeve 316. The bore 182" of the bushing 166" houses a conductive contact pin 368 that electrically connects the sensor element 66 to a connector 372 for electrical connection to the engine control unit (ECU). The contact pin 368 includes a first end 376 defining a substantially planar plate portion 380 that engages the end surface 118 of the cup-shaped member 78, thereby electrically contacting the lead portion 114 of the reference electrode 110.

A second end 384 of the contact pin 368 extends through the bore 344 of the grommet 320 and exits the sleeve assembly 300 through the opening 312. The grommet 320 thereby electrically isolates a portion of the contact pin 368 from the sleeve 316. The O-ring 352 substantially seals the interface between the bore 344 of the grommet 320 and an outer surface 388 of the contact pin 368 to substantially prevent the leakage of liquids into the sensor element 66. The second end 384 of the contact pin 368 includes a threaded portion 388 that receives a metallic spark plug-type post terminal 392. As used herein and in the appended claims, the term "spark plug-type post terminal" means any terminal of the type commonly configured for use on a spark plug. Preferably, the spark plug-type post terminal 392 conforms with the Society of Automotive Engineers (SAE) J548-1 standards for spark plugs, however, other non-conforming terminal designs can also be used.

The spark plug-type post terminal 392 is internally threaded for receipt onto the threaded portion 388 of the contact pin 368, thereby becoming electrically interconnected with the contact pin 368 to complete the electrical pathway between the sensor element 66 and the connector 372. A bulbous end 396 of the spark plug-type post terminal 392 is configured to be received in the connector 372 in the same manner commonly known for pressing a similar connector onto a spark plug post terminal. Additionally, threading the spark plug-type post terminal 392 onto the contact pin 368 mechanically secures and retains the grommet 320 and the O-rings 352, 360 in the second end 328 of the sleeve 316. The end 340 of the grommet 320 extends axially beyond the end 328 of the sleeve 316 to prevent the spark plug-type post terminal 392 and the connector 372 from contacting the sleeve 316 and grounding out the sensor element 66.

The electrical connection of the sensor 10" using the spark plug-type post terminal 392 and the connector 372 eliminates the lead wire air exchange path to the chamber 98 that was described above with respect to the sensors 10, 10'. Therefore, a different way of providing reference air exchange to the chamber 98 of the sensor 10" is provided. Specifically, the grommet 320 is made of a porous, gas-permeable PTFE material that allows air to pass through the grommet 320, while preventing liquids from passing therethrough. The reference air is therefore able to enter the sleeve assembly 300, flow around and/or through the bushing 166", around the plate portion 380 of the contact pin 368 and into the chamber 98.

Using the spark plug-type post terminal 392 and the connector 372 eliminates the need for platform-specific or application-specific wiring harnesses, and provides a uniform connection that can be introduced and used across all platforms and applications. The uniformity provided by the spark plug-type post terminal 392 makes the sensor 10", and other sensors that use the spark plug-type post terminal 392 and connector 372 arrangement, quickly and easily replaceable and interchangeable with aftermarket replacement sensors having a spark plug-type post terminal 392. It should be understood that the invention, as it pertains to the use of the spark plug-type post terminal 392 and connector 372 arrangement, is not limited to the illustrated sensor 10", but can be used on any existing or new sensor to provide a new and improved form of electrical connection between the sensor element (thimble-type, planar, or otherwise) and the ECU. This includes sensors used for both automotive and non-automotive applications.

In addition to providing uniformity of sensor connections, the spark plug-type post terminal 392 also provides benefits in testing and assembling the sensor 10". It is known to perform high temperature testing on longer exhaust gas sensors used for automotive applications, prior to shipping the sensors to a customer. Typically, the sensor element end of a sensor is tested in a high gas temperature environment (e.g., about 850° to 1050° C) to ensure the sensor is operating properly. Using these standardized tests for the shortened sensors 10, 10' could be problematic, in that the grommet 146 may not be able to withstand the high testing temperatures, since less sensor body length is available to dissipate heat.

The construction of the sensor 10" provides a way that the sensor 10" can be tested using existing standardized temperature testing procedures and equipment, without jeopardizing the components of the sensor 10" not suited to undergo such testing. Specifically, as seen in Fig. 6, the sensor 10" can be initially assembled into a subassembly (indicated generally by the letter S) that is fully functional and capable of operating as an exhaust gas sensor. The components of the subassembly S are capable of withstanding the predetermined temperatures associated with the standardized testing, and an electrical connection can be made directly to the second end 384 of the contact pin 368 using a temporary clip-on connector (not shown).

The components not suited for undergoing the high temperature testing, namely the grommet 320 and the O-rings 352, 360 in the illustrated embodiment, are left off the subassembly S during high temperature testing. After the testing is completed, the grommet 320 and O-rings 352, 360 are inserted into the second end 328 of the sleeve 316 and over the second end 384 of the contact pin 368. Next, the spark plug-type post terminal 392 is threaded onto the threaded portion 388 of the contact pin 368 to mechanically secure the grommet 320 and the O-rings 352, 360 to the subassembly S, as described above. This construction therefore allows shorter sensors to be tested using the standardized temperature testing procedures and equipment already in place for longer exhaust gas sensors of the type used in automotive applications.

The sensor 10" also includes a first length dimension L1 defined as a distance from the second end surface 54 of the nut portion 38 to the second end 308 of the sleeve assembly 300. The first length dimension L1 of the sensor 10" can range from about 33 mm to about 60 mm, and even more preferably from about 33 mm to about 55 mm. One preferred embodiment of the sensor 10" has a first length dimension L1 of about 33 mm. Again, this range is believed to provide at least some length dimensions L1 that are lower than corresponding lengths of prior art exhaust gas sensors (believed to go only as low as 56 mm for prior art thimble-type sensors), making the sensor 10" well-suited for the confined spaces of smaller, non-automotive engine applications.

The sensor 10" also includes a second length dimension L2 defined as a distance from the second end surface 54 of the nut portion 38 to the step 332 in the sleeve 316, which is closely adjacent to or substantially co-planar with the first end 336 of the grommet 320. The second length dimension L2 of the sensor 10" can range from about 19 mm to about 46 mm, and even more preferably from about 19 mm to about 41 mm. One preferred embodiment of the sensor 10" has a second length dimension L2 of about 19 mm. This range is believed to provide at least some length dimensions L2 that are lower than corresponding lengths of prior art exhaust gas sensors, again making the sensor 10" well-suited for the confined spaces of smaller, non-automotive engine applications.

Fig. 5 illustrates a sensor 10''' that is substantially the same as the sensor 10", but that is significantly shorter in overall length. The shortening of the first and second length dimensions L1 and L2 is achieved by shortening various components of the sensor 10". The shortened components are indicated as triple prime ("'). More specifically, as seen in Fig. 5, the contact pin 368"', the bushing 166''', and the sleeve 316''' are shortened in length to achieve shorter length dimensions L1 and L2. To make a longer sensor, these same components can be lengthened. The remaining components not labeled in Fig. 5 are substantially identical to those referenced in Fig. 4.

The sensor 10" further includes a third length dimension L3 that is the same as discussed above for the sensors 10, 10'. As with the sensors 10, 10', the same sensor element 66 can be used over this entire range of L3 dimensions by modifying the bore 26 in the housing 14 to vary the seating position of the sensor element 66. A corresponding change in the length of the bushing 166", 166''' and/or contact pin 368, 368''' and/or sleeve 316, 316''' may also be needed.

Other features and advantages of the invention will become apparent to those skilled in the art upon review of the following detailed description, claims, and drawings.

## Claims

1. An exhaust gas sensor comprising:
a sensor element configured to communicate with an exhaust gas of an internal combustion engine;
a contact pin having a first end electrically connected to the sensor element and a second end extending away from the sensor element; and
a spark plug-type post terminal connected to the second end of the contact pin.

2. The exhaust gas sensor of claim 1, wherein the spark plug-type post terminal conforms with SAE J548-1 standards.

3. The exhaust gas sensor of claim 1, wherein the spark plug-type post terminal is threaded onto the second end of the contact pin.

4. The exhaust gas sensor of claim 1, further comprising:
a housing supporting the sensor element;
a sleeve surrounding at least a portion of the contact pin and having a first end connected to the housing and a second end at a distance from the first end; and
a grommet surrounding at least a portion of the contact pin adjacent the second end of the sleeve, the grommet electrically isolating at least a portion of the contact pin and the spark plug-type post terminal from the sleeve.

5. The exhaust gas sensor of claim 4, wherein the grommet is gas-permeable, allowing gas to pass therethrough while substantially preventing liquids from passing therethrough.

6. The exhaust gas sensor of claim 5, wherein the grommet is made of polytetrafluoroethylene.

7. The exhaust gas sensor of claim 4, further comprising:
a first seal between the grommet and the sleeve; and
a second seal between the grommet and the contact pin.

8. The exhaust gas sensor of claim 1, wherein the sensor element includes:
a cup-shaped member supported by the housing, the cup-shaped member having a closed end, an open end, an outer surface, and an inner surface, the inner surface defining a chamber;
an exhaust electrode on the outer surface of the cup-shaped member; and
a reference electrode on the inner surface of the cup-shaped member, within the chamber.

9. A method of assembling and testing an exhaust gas sensor, the sensor including a subassembly capable of operating as an exhaust gas sensor and capable of withstanding a predetermined temperature used for testing, and at least one component that is not capable of withstanding the predetermined testing temperature, the method comprising;
assembling the subassembly;
testing the subassembly at the predetermined testing temperature; and
after testing the subassembly, installing the at least one component onto the subassembly.

10. The method of claim 9, wherein testing the subassembly at the predetermined temperature includes exposing at least a portion of the subassembly to a gas temperature ranging from about 850 to about 1050 degrees Centigrade.

11. The method of claim 9, wherein installing the at least one component onto the subassembly includes installing a grommet onto the subassembly.

12. The method of claim 11, wherein installing the at least one component onto the subassembly further includes installing an O-ring between the grommet and the subassembly.

13. The method of claim 9, further comprising:
installing a spark plug-type terminal onto the subassembly after installing the at least one component onto the subassembly to secure the at least one component onto the subassembly.

14. An exhaust gas sensor for use in non-automotive applications, the sensor comprising:
a housing having a threaded portion configured to be received in a threaded opening, and an integral nut portion adjacent the threaded portion, the nut portion having a first end surface and a second end surface and being configured to receive a tool for tightening the housing in the threaded opening;
a sensor element having a first end connected to the housing and a second end extending away from the housing, the sensor element including a cup-shaped member supported by the housing, the cup-shaped member having a closed end, an open end, an outer surface, an inner surface defining a chamber, an exhaust electrode on the outer surface, and a reference electrode on the inner surface within the chamber;
a contact pin electrically connected to the sensor element; and
a sleeve assembly connected to the housing and at least partially surrounding the contact pin, the sleeve assembly including a first end connected to the housing and a second end at a distance from the housing, the second end including an opening through which at least one of the contact pin and a lead electrically connected to the contact pin exits the sleeve assembly;
wherein the exhaust gas sensor has a first length dimension defined as a distance from the second end surface of the nut portion to the second end of the sleeve assembly, the first length dimension ranging from about 33 mm to about 55 mm.

15. The exhaust gas sensor of claim 14, wherein the first length dimension ranges from about 33mm to about 43 mm.

16. The exhaust gas sensor of claim 14, further comprising:
a tube having a first end and a second end, the first end being connected to the housing such that the tube substantially surrounds and encloses the second end of the sensor element;
wherein the exhaust gas sensor has a second length dimension defined as a distance from the second end of the tube to the second end surface of the nut portion, the second length dimension ranging from about 18 mm to about 28 mm.

17. The exhaust gas sensor of claim 16, wherein the second length dimension ranges from about 23 mm to about 28 mm.

18. The exhaust gas sensor of claim 14, wherein the sleeve assembly includes a sleeve and a grommet at least partially in the sleeve.

19. The exhaust gas sensor of claim 18, wherein the grommet has a first end closest to the housing, and wherein the exhaust gas sensor has a second length dimension defined as a distance from the second end surface of the nut portion to the first end of the grommet, the second length dimension ranging from about 15 mm to about 45 mm.

20. The exhaust gas sensor of claim 14, further comprising:
a bushing surrounding the contact pin and electrically isolating the contact pin from at least a portion of the sleeve assembly and the housing.

21. The exhaust gas sensor of claim 14, wherein the contact pin has a first end connected to the sensor element and a second end at a distance from the sensor element, and wherein the exhaust gas sensor further comprises:
a spark plug-type post terminal connected to the second end of the contact pin.

22. The exhaust gas sensor of claim 21, wherein the spark plug-type post terminal conforms with SAE J548-1 standards.

23. The exhaust gas sensor of claim 21, wherein the spark plug-type post terminal is threaded onto the second end of the contact pin.
